Europäisches Patentamt

European Patent Office

Office européen des brevets

(19)

(11) Veröffentlichungsnummer : **0 200 130**
**B1**

(12) **EUROPÄISCHE PATENTSCHRIFT**

(45) Veröffentlichungstag der Patentschrift :
28.09.88

(51) Int. Cl.⁴ : **F 02 C 7/12**, F 02 C 7/18

(21) Anmeldenummer : 86105463.3

(22) Anmeldetag : 21.04.86

(54) Gasturbinentriebwerk mit Einrichtungen zur Abzweigung von Verdichterluft zur Kühlung von Heissteilen.

(30) Priorität : 20.04.85 DE 3514352

(43) Veröffentlichungstag der Anmeldung :
05.11.86 Patentblatt 86/45

(45) Bekanntmachung des Hinweises auf die Patenterteilung : 28.09.88 Patentblatt 88/39

(84) Benannte Vertragsstaaten :
FR GB IT SE

(56) Entgegenhaltungen :
GB-A- 1 039 650
GB-A- 1 158 634
US-A- 3 422 623
PATENTS ABSTRACTS OF JAPAN, Band 5, Nr. 139
(M-86)[811], 3. September 1981; & JP - A - 56 72 224
(HITACHI SEISAKUSHO K.K.) 16-06-1981

(73) Patentinhaber : MTU MOTOREN- UND TURBINEN-
UNION MÜNCHEN GMBH
Dachauer Strasse 665 Postfach 50 06 40
D-8000 München 50 (DE)

(72) Erfinder : Hennecke, Dietmar, Dr.
Stahlstrasse 29
D-8000 München 60 (DE)
Erfinder : Pfaff, Klaus
Bockmeyrstrasse 9
D-8000 München 50 (DE)
Erfinder : Grigo, Dietrich
Landshuter Allee 156
D-8000 München 19 (DE)

EP 0 200 130 B1

## Beschreibung

Die Erfindung bezieht sich auf ein Gasturbinentriebwerk mit Verdichter, Brennkammer und Turbine(n) mit Einrichtungen zur Abzweigung von Verdichterluft zur Kühlung von Heißteilen der Turbine(n), insbesondere des Turbinenrotors, wobei die vom Verdichter abgezweigte Kühlluft über Bauteile hoher Wärmekapazität und großer Oberfläche, wie Verdichterscheiben, Wellen oder Gehäusewandungen, zu den zu kühlenden Heißteilen der Turbine geführt wird.

Ein solches Gasturbinentriebwerk ist aus der GB-A 11 58 634 bekannt.

Bei Gasturbinen mit hohen Turbineneintrittstemperaturen werden Heißteile, wie Turbinenscheiben und Schaufeln nach dem allgemeinen Stand der Technik mit Luft gekühlt, die im oder nach dem Verdichter aus dem Hauptstrom abgezapft und zur Turbine geleitet wird. Bei schnellen Lastwechseln des Triebwerks, wie sie vor allem für Flug- und Fahrzeuggasturbinen charakteristisch sind, ändert sich die Temperatur der Kühlluft entsprechend rasch (in wenigen Sekunden) auf den neuen Wert. Diese schnelle Temperaturänderung der Kühlluft bedeutet, daß dünnwandige, von der Kühlluft beaufschlagte Heißteile, wie Teile der Turbinenscheibe, Flanschverbindungen, Labyrinthdichtungen, Scheibenringe usw. ebenfalls rasch ihre Temperatur ändern. Da aber z. B. die dickeren Bereiche der Turbinenscheibe mit ihrer größeren Masse nur viel langsamer den Temperaturwechseln der Kühlluft folgen, entstehen zwischenzeitlich große Temperaturunterschiede zwischen dickwandigen und dünnwandigen Partien, so daß hohe Thermospannungen auftreten, die zur Reduktion der Lebensdauer oder gar zu Brüchen führen können.

Solche Effekte können vor allem an Rotorscheiben aber auch an Turbinenschaufeln auftreten. Die Temperaturen der Schaufeln werden im wesentlichen bestimmt durch die Temperatur des außen um die Schaufel strömenden Heißgases und die Temperatur der innen durch die Schaufel geführten Kühlluft. Bei einem schnellen Lastwechsel ändern sich Heißgas- und Kühllufttemperatur rasch, was in den Schaufelwandungen ebenfalls zu zwischenzeitlich großen Temperaturgradienten führt, die hohe Thermospannungen und damit eine Reduktion der Lebensdauer bzw. Bruch verursachen können.

Eine erhebliche Verbesserung dieser Situation würde dadurch erzielt, daß die Kühlluft oder zumindest der die dünnwandigen Teile umströmende Anteil der Kühlluft bei schnellen Lastwechseln ihre Temperatur nur langsam ändern würden.

Bei dem Gasturbinentriebwerk nach der obengenannten GB-A 11 58 634 sind die Kühlluftführungen zwar zum Teil zo angeordnet, daß sie an Bauteilen hoher Wärmekapazität entlang verlaufen, dennoch wird dort die Kühlluft immer auf möglichst direktem Weg von der Kühlluftquelle zu dem zu kühlenden Heißteil geführt, so daß das thermische Zeitverhalten der Kühlluft bei Lastwechseln immer noch zu schnell ist.

Aufgabe der vorliegenden Erfindung ist es deshalb, ein Gasturbinentriebwerk der eingangs genannten Gattung zu schaffen, welches durch geeignete Ausbildung der Kühlluftführung ein langsames (träges) thermisches Zeitverhalten der Kühlluft aufweist.

Erfindungsgemäß wird diese Aufgabe dadurch gelöst, daß der Weg der Kühlluft zunächst an der Rückseite eines Verdichterrades vorbei, dann über hohle Schaufeln des Verdichterdiffusors und schließlich entlang der Gehäusewände des Verdichters führt.

Durch die erfindungsgemäße Ausbildung, bei der die Kühlluft im Gegensatz zum Stand der Technik nicht auf dem kürzest praktikablen Weg von der Abzapfstelle zur Verbrauchsstelle geführt wird sondern auf einem möglichst langen Weg, wird im instationären Betriebsfall ein erheblicher Wärmeaustausch zwischen der Kühlluft und den Bauteilen hoher Wärmekapazität und großer Oberfläche erreicht und somit eine erhebliche Verlangsamung des thermischen Zeitverhaltens der Kühlluft erzielt.

Die gestellte Aufgabe ist erfindungsgemäß auch dadurch zu lösen, daß die Bauteile hoher Wärmekapazität und großer Oberfläche gasdurchlässige Strukturen nach Art von Wärmetauschermatrizen umfassen.

Nach einer ersten bevorzugten Ausführungsform der Erfindung sind die Bauteile hoher Wärmekapazität zusätzlich in die Kühlluftführung eingesetzte, den Strömungsweg der Kühlluft verlängernde Wandungen. Durch solche zusätzlichen, im Triebwerk vorgesehene Bauteile hoher Wärmekapazität kann der gewünschte Effekt in verstärktem Maß herbeigeführt werden, wobei eine Kombination dieser Ausführungsform mit den beiden grundsätzlichen Lösungen vorgesehen werden kann.

Eine vorteilhafte Ausgestaltung erfährt die Erfindung dadurch, daß die Bauteile hoher Wärmekapazität wärmeübergangserhöhende Oberflächengestaltung, wie z. B. Rippen, Noppen, Stifte oder dergleichen aufweisen.

Schließlich ist es zur Erzielung eines langsamen thermischen Zeitverhaltens der Kühlluft vorteilhaft, wenn die gasdurchlässigen Strukturen durchgängig poröse Materialien oder Schichten von Drahtgeflechten oder auch Kugelschüttungen sind, die in die Kühlluftführungen eingesetzt bzw. eingebracht sind.

Die nach der Erfindung gewünschte Wirkung eines langsamen thermischen Zeitverhaltens der Kühlluft wird besonders dann erreicht, wenn, wie für eine bevorzugte Ausführungsform vorgeschlagen, die Bauteile hoher Wärmekapazität und großer Oberfläche gegen anderweitige Kühlmittelströme isoliert sind.

Anhand der beigefügten Zeichnungen werden Ausführungsbeispiele der Erfindung erläutert:
In der Zeichnung zeigt

Fig. 1 einen Längsschnitt durch ein erfindungsgemäß gestaltetes Gasturbinentriebwerk der Ausführungsform nach Patentanspruch 1,

Fig. 2 einen Längsschnitt durch ein Gasturbinentriebwerk ähnlich dem nach Fig. 1, jedoch mit einem veränderten Strömungsweg der Kühlluft,

Fig. 3 eine weitere Ausführungsform eines Gasturbinentriebwerks ähnlich dem in Fig. 1,

Fig. 4 den Längsschnitt eines Gasturbinentriebwerks ähnlich dem in Fig. 1, jedoch mit einem Kühlluftführung durch eine gasdurchlässige Struktur,

Fig. 5 den Längsschnitt eines Gasturbinentriebwerks ähnlich dem in Fig. 1, jedoch in herkömmlicher Bauweise und

Fig. 6 die graphische Darstellung des Temperaturverlaufs in Abhängigkeit der Zeit an Scheibennabe, Scheibenrand und Labyrinthring eines Turbinenrotors, jeweils im Vergleich zwischen einem herkömmlichen Triebwerk und einem erfindungsgemäß ausgebildeten Triebwerk.

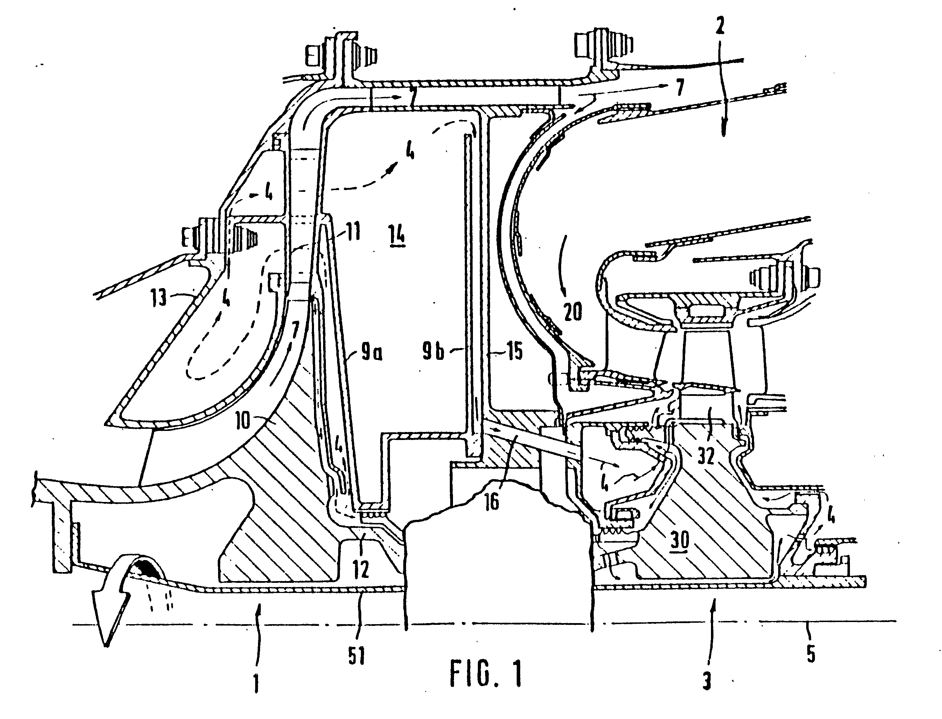

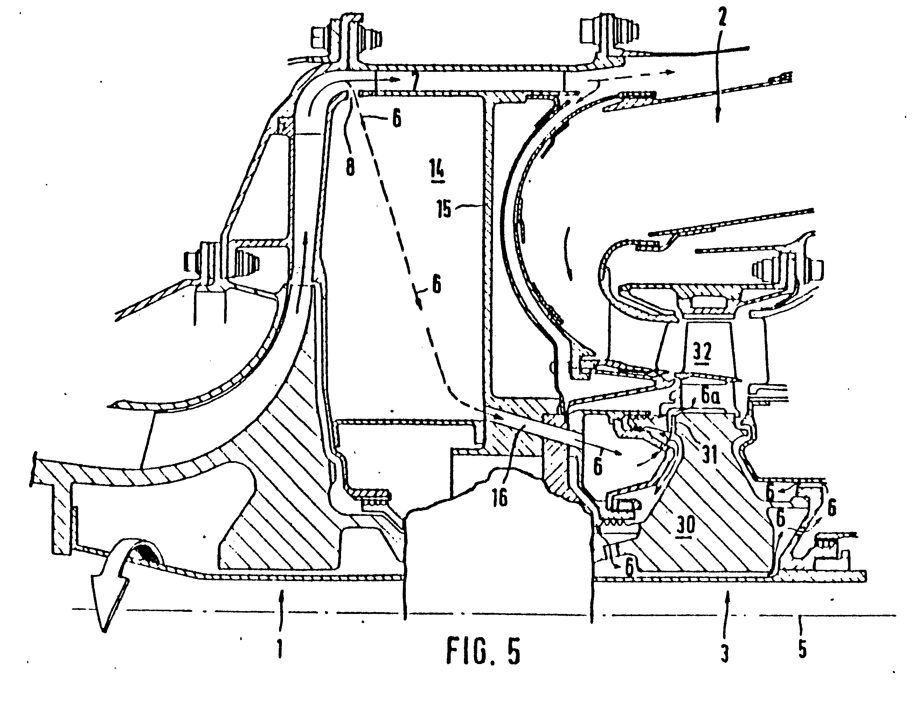

Zur Erleichterung des Verständnisses der Erfindung ist in Fig. 5 ausschnittweise der Längsschnitt eines typischen Gasturbinentriebwerks für die Abgabe von Wellenleistung in konventioneller Bauart dargestellt. In den Fig. 1 bis 4 wird gezeigt, wie dieses Triebwerk entsprechend der erfindung zu ändern ist. Das Triebwerk nach Fig. 5 umfaßt einen Verdichter 1 mit radialer Endstufe, eine Brennkammer 2 und eine Turbine 3. Die zentrale Längsachse des Triebwerks ist mit 5 bezeichnet. Eine zentrale Welle trägt das Bezugszeichen 51. Stromabwärts des Verdichters 1 wird dem zur Brennkammer 2 führenden Hauptluftstrom 7 an der Stelle 8 Kühlluft entnommen, die in herkömmlicher Weise auf dem kürzest praktikablen Weg der Turbine 3 zugeleitet wird. Der Weg ist mit einer strichlierten Linie und Pfeilen angegeben und mit dem Bezugszeichen 6 versehen. Er führt, ausgehend von der Stelle 8, durch einen Verdichterinnenraum 14, der zur Brennkammer 2 hin durch eine Radialwand 15 abgegrenzt ist und von dort durch einen Kühlluftkanal 16 direkt zur Turbinenscheibe 30. Der Hauptteil der Kühlluft umströmt die gesamte Oberfläche der Turbinenscheibe 30, während ein geringerer Teil 6a der Kühlluft durch Kühlluftkanäle 31 im Schaufelfußbereich der Turbinenscheibe 30 zur Kühlung für die Rotorschaufeln 32 abgezweigt wird.

Der in Fig. 1 dargestellte Teil des Längsschnitts eines Gasturbinentriebwerkwerks entspricht im wesentlichen der Fig. 5, wobei gleiche Bauteile mit gleichen Bezugszeichen wie in Fig. 5 versehen sind. Im Gegensatz zu der herkömmlichen Ausführungsform nach Fig. 5 wird die Kühlluft zur Verlangsamung ihres thermischen Verhaltens jedoch in erfindungsgemäßer Weise vom Verdichter auf einem Umweg zu den zu kühlenden Heißteilen der Turbine 3 geführt. Dieser Umweg ist mit einer strichlierten Linie und in Strömungsrichtung weisenden Pfeilen mit dem Bezugszeichen 4 angegeben. Noch vor Eintritt des Hauptluftstromes 7 in den Diffusor 11 des Verdichters 1 wird dem Hauptluftstrom ein Kühlluftanteil entnommen und zunächst über die Rückseite des Radialverdichterrades 10 sowie über dessen Wellenflansch 12 geführt, dann entlang einer radial verlaufenden Gehäusezwischenwand 9a durch hohle Schaufeln des Radialverdichterdiffusors 11, entlang der inneren Oberfläche des Verdichtergehäuses 13. Von dort führt der Weg der Kühlluft wieder über Hohlräume im äußeren Teil der Radialverdichterdiffusorschaufeln in den Verdichterinnenraum 14, wo mittels einer weiteren radial verlaufenden Gehäusezwischenwand 9b die Kühlluft entlang der Radialwand 15 zum Kühlluftkanal 16 geführt wird. Der weitere Weg der Kühlluft verläuft wie in Fig. 5 gezeigt und oben beschrieben.

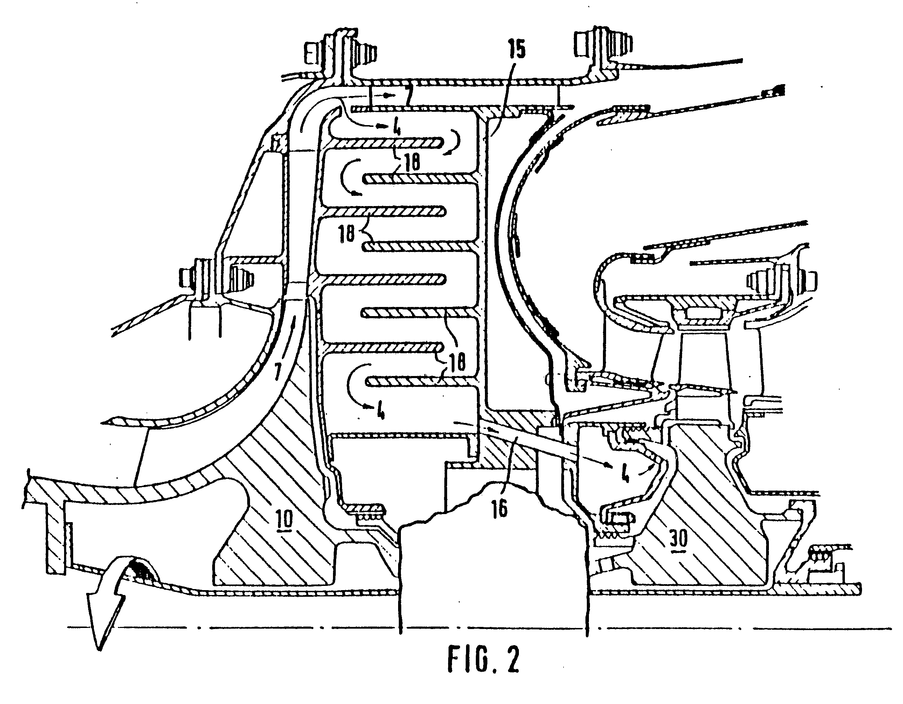

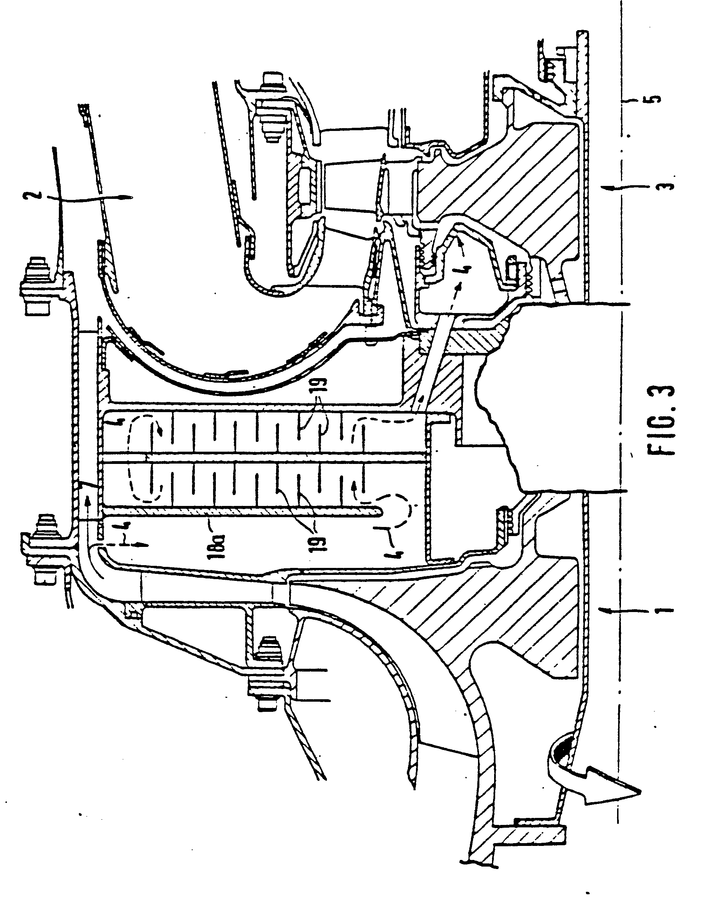

Wie in Fig. 2 gezeigt, können zur Verlangsamung des thermischen Verhaltens der Kühlluft alternativ zu den Maßnahmen nach Fig. 1 oder auch zusätzlich in die Kühlluftführung gasdurchlässige Strukturen nach Art von Wärmetauschermatrizen, z. B. den Strömungsweg der Kühlluft verlängernde Wandungen 18 eingesetzt werden. Im dargestellten Ausführungsbeispiel nach Fig. 2 wird die Kühlluft durch die Anordnung der Wandungen 18 mäanderförmig geführt, wobei sie mit den Wandungen 18 Wärme austauscht. Ein sprunghafter Anstieg der Temperatur der Kühlluft am Verdichteraustritt wird dadurch abgeflacht, daß die Kühlluft einen Teil ihrer Wärme z. B. an diese Wandungen 18 abgibt. Eine andere Anordnung von den Strömungsweg der Kühlluft verlängernden Wandungen 18 ist z. B. in Fig. 3 dargestellt. Auch dort wird die Kühlluft mäanderformig geführt, jedoch verlaufen die entsprechenden Wandungen 18a in Radialrichtung bezogen auf die zentrale Triebwerkslängsachse 5. Zur Erhöhung des Wärmeaustausches zwischen der Kühlluft und diesen Wandungen 18a sind bei der Ausführungsform nach Fig. 3 Rippen 19 vorgesehen. In gleicher Weise oder zusätzlich können Noppen oder Stifte oder ähnliches zur Anwendung kommen, die die Turbulenz der Kühlluftströmung und die wärmeübertragende Oberfläche vergrößern.

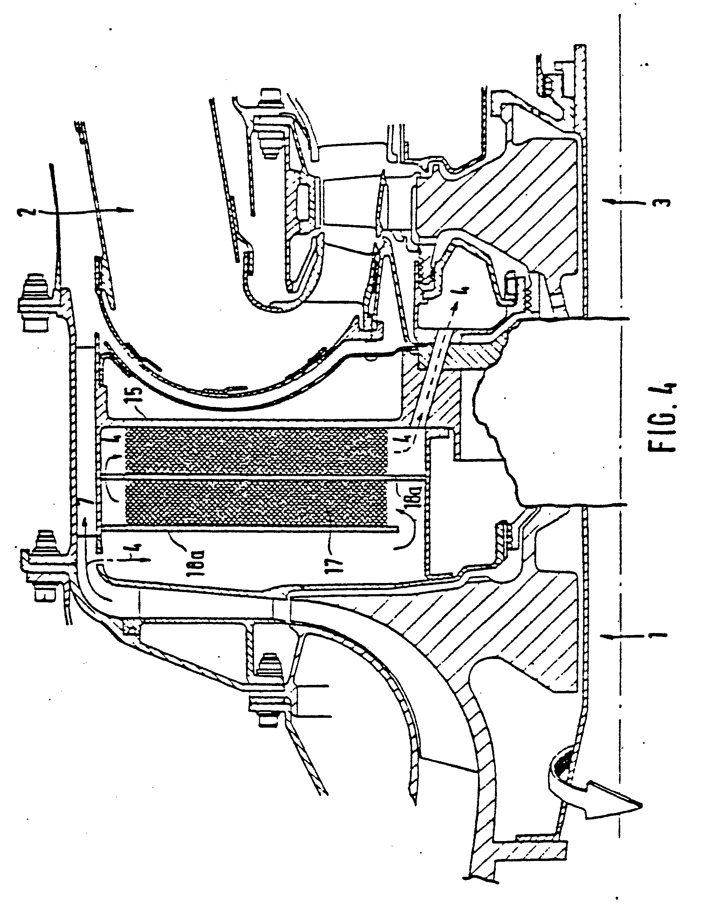

Bei der in Fig. 4 dargestellten Ausführungsform der Erfindung ist zwischen der Radialwand 15 und den Wandungen 18a eine gasdurchlässige Struktur nach Art einer Wärmetauschermatrix vorgesehen, die aus porösem Material, aus Schichten von Drahtgeflechten oder aus einer Kugelschüttung 17, wie in Fig. 4 gezeigt, bestehen kann. Wie die Ausführungsformen nach Fig. 2 und Fig. 3 kann auch die Ausbildung nach Fig. 4 zusätzlich zu der Kühlluftführung gemäß Fig. 1 vorgesehen sein.

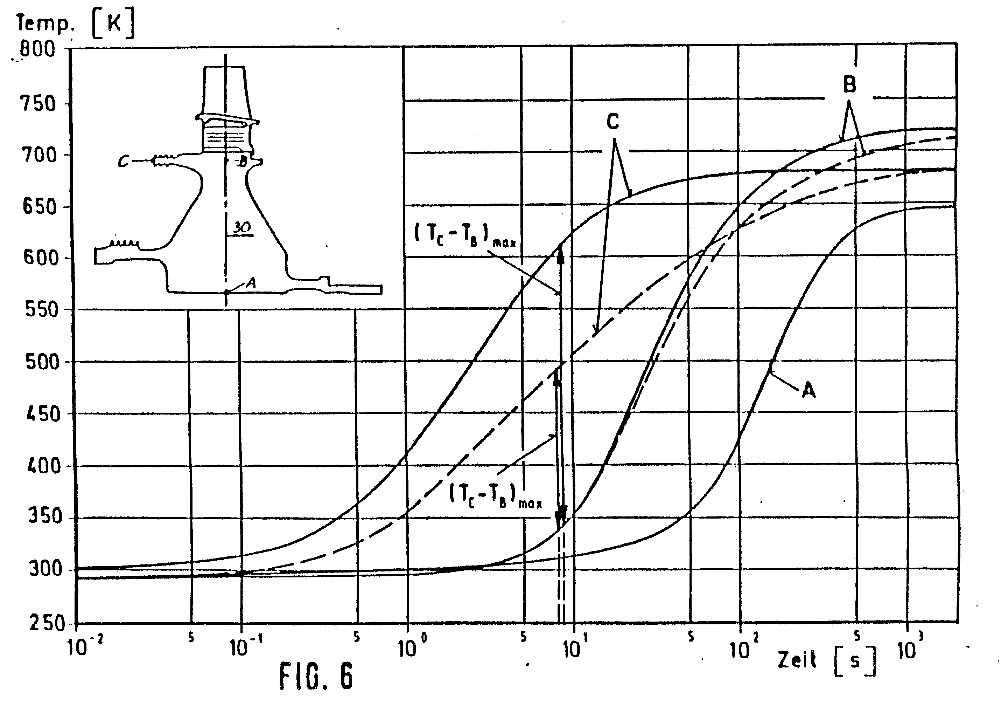

Die Wirkung der erfindungsgemäßen Kühlluftführung nach den Fig. 1 bis 4 ist in dem Diagramm nach Fig. 6 dargestellt. In dem Diagramm ist auf der Abszisse die Zeit in logarithmischem Maßstab, auf der Ordinate die Temperatur in K aufgetragen. In der linken oberen Ecke des Diagramms ist der Turbinenrotor 30 des in den Fig. 1 bis 5 dargestellten Gasturbinentriebwerks gezeigt, und es sind an ihm drei Temperaturmeßstellen A, B und C angegeben.

Für jede dieser Temperaturmeßstellen A, B, C sind die Temperaturverläufe über der Zeit im Beschleunigungsfall des Gasturbinentriebwerks angegeben und zwar einmal für ein Triebwerk mit herkömmlicher Kühlluftführung gemäß Fig. 5 in ausgezogenen Linien und einmal für erfindungsgemäß ausgebildete Triebwerke nach den Fig. 1 bis 4 in strichlierten Linien. Die Differenzwerte $(T_C - T_B)_{max}$, das sind die maximal auftretenden Temperaturdifferenzen zwischen der Meßstelle C und der Meßstelle B, unterscheiden sich für die strichlierten Linienzüge und die durchgezogenen Linienzüge beträchtlich. Mit der erfindungsgemäßen Kühlluftführung ist die maximal auftretende Temperaturdifferenz zwischen der Stelle B und der Stelle C am Turbinenrotor sehr viel geringer und demzufolge treten auch in entsprechend geringerem Maß Wärmespannungen auf.

**Patentansprüche**

1. Gasturbinentriebwerk mit Verdichter, Brennkammer und Turbine(n) mit Einrichtungen zur Abzweigung von Verdichterluft zur Kühlung von Heißteilen der Turbine(n), insbesondere des Turbinenrotors, wobei die vom Verdichter abgezweigte Kühlluft über Bauteile hoher Wärmekapazität und großer Oberfläche, wie Verdichterscheiben, Wellen oder Gehäusewandungen, zu den zu kühlenden Heißteilen der Turbine geführt wird, dadurch gekennzeichnet, daß der Weg der Kühlluft zunächst an der Rückseite eines Verdichterrades vorbei, dann über hohle Schaufeln des Verdichterdiffusors und schließlich entlang der Gehäusewände des Verdichters führt.

2. Gasturbinentriebwerk mit Verdichter, Brennkammer und Turbine(n) mit Einrichtungen zur Abzweigung von Verdichterluft zur Kühlung von Heißteilen der Turbine(n), insbesondere des Turbinenrotors, wobei die vom Verdichter abgezweigte Kühlluft über Bauteile hoher Wärmekapazität und großer Oberfläche, wie Verdichterscheiben, Wellen oder Gehäusewandungen zu den zu kühlenden Heißteilen der Turbine geführt wird, dadurch gekennzeichnet, daß die Bauteile hoher Wärmekapazität und großer Oberfläche gasdurchlässige Strukturen nach Art von Wärmetauschermatrizen umfassen.

3. Triebwerk nach dem Ansprüchen 1 oder 2, dadurch gekennzeichnet, daß die Bauteile hoher Wärmekapazität in die Kühlluftführungen eingesetzte, den Strömungsweg der Kühlluft verlängernde Wandungen (18) aufweisen.

4. Triebwerk nach einem der Ansprüche 1 bis 3, dadurch gekennzeichnet, daß die Bauteile hoher Wärmekapazität wärmeübergangserhöhende Oberflächengestaltung, wie z. B. Rippen (19), Noppen, Stifte oder dergleichen aufweisen.

5. Triebwerk nach Anspruch 2, dadurch gekennzeichnet, daß die gasdurchlässigen Strukturen durchgängig poröse Materialien sind.

6. Triebwerk nach Anspruch 2, dadurch gekennzeichnet, daß als gasdurchlässige Strukturen Schichten von Drahtgeflechten in die Kühlluftführung eingesetzt werden.

7. Triebwerk nach Anspruch 2, dadurch gekennzeichnet, daß als gasdurchlässige Struktur eine Kugelschüttung (17) verwendet wird.

8. Triebwerk nach einem oder mehreren der Ansprüche 1 bis 7, dadurch gekennzeichnet, daß die Bauteile hoher Wärmekapazität und großer Oberfläche gegen anderweitige Kühlmittelströme isoliert sind.

**Claims**

1. Gas turbine propulsion unit comprising compressor, combustion chamber and turbine(s) with means of branching off compressor air for cooling hot parts of the turbine(s), particularly of the turbine rotor, the cooling air branched off from the compressor being passed over components of high heat capacity and considerable surface area such as compressor blades, shafts or housing walls to the hot parts of the turbine(s) which are to be cooled, characterised in that the path of the cooling air extends firstly over the back of a compressor wheel then over hollow blades of the compressor diffuser and finally along the housing walls of the compressor.

2. Gas turbine propulsion unit comprising compressor, combustion chamber and turbine(s) with means of branching off compressor air for cooling hot parts of the turbine(s), particularly of the turbine rotor, the cooling air branched off from the compressor being passed over components of high heat capacity and large surface area such as compressor blades, shafts or housing walls to the hot parts of the turbine which are to be cooled, characterised in that the components of high heat capacity and large surface area comprise gas-permeable structures after the fashion of heat exchanger matrices.

3. Propulsion unit according to Claims 1 or 2, characterised in that the components of high heat capacity have walls (18) which extend the flow path of the cooling air and which are inserted into the cooling air guides.

4. Propulsion unit according to one of Claims 1 to 3, characterised in that the components of high heat capacity comprise a surface structure such as for example ribs (19), knobs, studs or the like which enhance the transfer of heat.

5. Propulsion unit according to Claim 2, characterised in that the gas permeable structures are entirely of porous materials.

6. Propulsion unit according to Claim 2, characterised in that, as gas permeable structures, layers of wire mesh are inserted into the cooling air guide.

7. Propulsion unit according to Claim 2, characterised in that a loose fill (17) of balls is used as the gas permeable structure.

8. Propulsion unit according to one or more of Claims 1 to 7, characterised in that the components of high heat capacity and large surface area are insulated against other kinds of coolant flows.

**Revendications**

1. Propulseur à turbine à gaz avec un compresseur, une chambre de combustion et une turbine ou des turbines, propulseur comportant des dispositifs de dérivation de l'air comprimé pour refroidir des parties chaudes de la turbine, ou des turbines, notamment le rotor de turbine, l'air de refroidissement dérivé du compresseur étant amené aux parties chaudes de la turbine, par l'intermédiaire de parties constitutives de capacité thermique élevée et de grande surface, telles que des disques de compresseur, des arbres ou des parois de carter, propulseur caractérisé en ce que le trajet de l'air de refroidissement passe tout d'abord le long de la face arrière d'une roue de compresseur, puis, par l'intermédiaire d'aubes creuses du diffuseur du compresseur, et finalement le long des parois du carter du compresseur.

2. Propulseur à turbine à gaz avec un compresseur, une chambre de combustion et une turbine ou des turbines, propulseur comportant des dispositifs de dérivation de l'air comprimé pour refroidir des parties chaudes de la turbine, ou des turbines, notamment le rotor de turbine, l'air de refroidissement dérivé du compresseur étant amené aux parties chaudes de la turbine, par l'intermédiaire de parties constitutives de capacité thermique élevée et de grande surface, telles que des disques de compresseur, des arbres ou des parois de carter, propulseur caractérisé en ce que les parties constitutives de capacité thermique élevée et de grande surface, englobent des structures perméables aux gaz du type des matrices d'échangeurs thermiques.

3. Propulseur selon les revendications 1 ou 2, caractérisé en ce que les parties constitutives de capacité thermique élevée, comportent des parois (18) mises en place dans les passages d'air de refroidissement et allongeant le trajet d'écoulement de cet air de refroidissement.

4. Propulseur selon une des revendications 1 à 3, caractérisé en ce que les parties constitutives de capacité thermique élevée, ont une structure superficielle augmentant la transmission de chaleur telle que par exemple des nervures (19), des noppes, des broches ou des structures analogues.

5. Propulseur selon la revendication 2, caractérisé en ce que les structures perméables aux gaz sont des matériaux poreux perméables.

6. Propulseur selon la revendication 2, caractérisé en ce que, comme structures perméables aux gaz, on met en place dans le passage de l'air de refroidissement des couches de treillis en fil métallique.

7. Propulseur selon la revendication 2, caractérisé en ce que, comme structures perméables aux gaz, on utilise des billes en vrac (17).

8. Propulseur selon une ou plusieurs des revendications 1 à 7, caractérisé en ce que les parties constitutives de capacité thermique élevée et de grande surface, sont isolées vis-à-vis des autres écoulements d'agents de refroidissement.

FIG. 1

FIG. 2

FIG. 3

FIG. 4

FIG. 5

0 200 130

FIG. 6